# EUROPEAN PATENT APPLICATION

(11) **EP 2 503 381 A1**
(43) Date of publication of application: **26.09.2012**
(21) Application number: 10829806.8
(22) Date of filing: 14.10.2010
(51) Int. Cl.: G02F 1/1333, F21S 2/00, G02F 1/13357, G09F 9/00, F21Y 103/00

(54) **LIQUID CRYSTAL DISPLAY DEVICE**

(30) Priority: 16.11.2009 JP 2009260656
(71) Applicant: Sharp Kabushiki Kaisha, Osaka-shi, Osaka 545-8522 (JP)
(72) Inventor: NISHIMURA, Tohru, Osaka-shi, Osaka 545-8522 (JP)
(74) Representative: Müller-Boré & Partner Patentanwälte
(86) International application number: PCT/JP2010/068069
(87) International publication number: WO 2011/058846

(57) **Abstract**

A liquid crystal display device 100 includes a liquid crystal panel 12, a backlight device 14, a first housing 16, and a second housing 18. The backlight device 14 is located to face a rear surface of the liquid crystal panel 12. The first housing 16 supports the liquid crystal panel 12 and has a peripheral portion 22 extending along a periphery of the liquid crystal panel 12. The second housing 18 accommodates the backlight device 14, and has a peripheral portion 24 overlapping an inner surface of the peripheral portion 22 of the first housing 16. An attachment hole 26 is formed in the peripheral portion 24 of the second housing 18. At the peripheral portion 22 of the first housing 16, an attachment piece 28 overlapping, and joined to, an inner surface of the peripheral portion 24 of the second housing 18 through the attachment hole 26 in the peripheral portion 24 of the second housing 18 is provided.

## Description

### TECHNICAL FIELD

The present invention relates to a liquid crystal display device.
The present application claims the benefit of priority based upon Japanese Patent Application No. 2009-260656 filed on November 16, 2009, the entirety of which is incorporated herein by reference.

### BACKGROUND ART

A liquid crystal display device includes a liquid crystal panel and a backlight device. The liquid crystal panel and the backlight device are each supported by a housing. The liquid crystal panel is attached to a frame-shaped housing surrounding a periphery of a display area in which pixels are provided (such a housing is also referred to as a "bezel"). The backlight device is accommodated in a housing which is provided to face a rear surface of the liquid crystal panel and has a front opening (such a housing is also referred to as a "backlight chassis"). The liquid crystal panel and the backlight device are assembled together such that the backlight faces the rear surface of the liquid crystal panel. Herein, for the sake of convenience, the term "front surface" used for the liquid crystal panel means a surface thereof on the side of a display surface, and the term "rear surface" used for the liquid crystal panel means a surface thereof on the side opposite thereto.

Regarding the structure of such a liquid crystal display device, Patent Document 1, for example, discloses that the bezel is formed of a metal and is connected to a metal member such as a case or a chassis to form a ground. In this case, the bezel provides an effect of blocking electromagnetic waves and thus can suppress, to some extent, an influence of the electromagnetic waves by which external noise is caused (EMI: Electromagnetic Interference).

### CITATION LIST

### PATENT DOCUMENT

Patent Document 1: Japanese Patent Laid-Open Publication No. 2008-96835

### SUMMARY OF THE INVENTION

### TECHNICAL PROBLEM

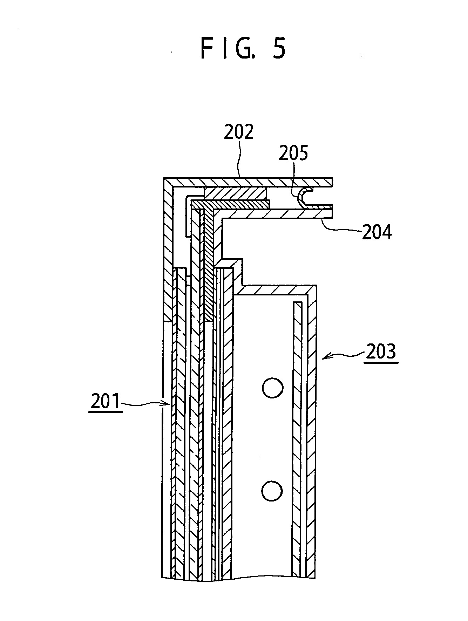

In order to enhance the effect provided by blocking electromagnetic waves, it is preferable to improve the conductivity between the housing (bezel) of the liquid crystal panel and the housing (backlight chassis) of the backlight device, thus to reinforce the ground of the housing of the liquid crystal panel. Referring to FIG. 5, in order to improve the conductivity between a housing (bezel) of a liquid crystal panel 201 and a housing (backlight chassis) of a backlight device 203, it is preferable to, for example, bond a conductive sheet 205 to both of the housing (bezel 202) of the liquid crystal panel 201 and the housing (backlight chassis 204) of the backlight device 203, so that the housings are conductive to each other. Owing to this, the ground of the bezel 202 is reinforced. Therefore, it is expected to improve the effect provided by blocking the electromagnetic waves. However, the above-described structure requires a step of bonding the conductive sheet 205 to the housing (bezel 202) of the liquid crystal panel 201 and the housing (backlight chassis 204) of the backlight device 203 during the assembly of the liquid crystal panel 201 and the backlight device 203. This lowers the workability of the assembling the liquid crystal panel 201 and the backlight device 203 together.

The present invention proposes a novel structure capable of improving the conductivity between a housing (bezel) of a liquid crystal panel and a housing (backlight chassis) of a backlight device.

### SOLUTION TO THE PROBLEM

A liquid crystal display device according to the present invention includes a liquid crystal panel; a backlight device located to face a rear surface of the liquid crystal panel; a first housing for supporting the liquid crystal panel, the first housing having a peripheral portion extending along a periphery of the liquid crystal panel; a second housing for accommodating the backlight device, the second housing having a peripheral portion overlapping an inner surface of the peripheral portion of the first housing; an attachment hole formed in the peripheral portion of the second housing; and an attachment piece provided at the peripheral portion of the first housing, and overlapping, and joined to, an inner surface of the peripheral portion of the second housing through the attachment hole in the peripheral portion of the second housing.

According to such a liquid crystal display device, the attachment piece provided at the peripheral portion of the first housing is inserted into the attachment hole of the peripheral portion of the second housing, and as a result, the attachment piece of the first housing can overlap an inner surface of the peripheral portion of the second housing. Therefore, the workability of assembling the first housing and the second housing together is high. The first housing and the second housing may each be formed of a conductive material. In this case, the first housing and the second housing are joined together via the attachment piece and therefore, are highly conductive to each other. Thus, the EMI can be reduced.

In this case, the liquid crystal display device may further include a printed circuit board connected to the peripheral portion of the liquid crystal panel with a flexible wiring board being provided therebetween; and a board support for supporting rear surfaces of the peripheral portion of the liquid crystal panel, the flexible wiring board and the printed circuit board. In this case, it is preferable that the printed circuit board and the board support are held between the first housing and the second housing.

The attachment piece of the first housing may be formed by internally bending a part of the peripheral portion of the first housing. In this case, it is preferable that, for example, during a step of forming the first housing by press work, a part of the peripheral portion of the first housing is cut and bent internally. It is preferable that the peripheral portion of the second housing and the attachment piece of the first housing are secured to each other by a screw.

### BRIEF DESCRIPTION OF THE DRAWINGS

[FIG. 1] FIG. 1 is an exploded perspective view showing a liquid crystal display device according to an embodiment of the present invention.
[FIG. 2] FIG. 2 is a partial cross-sectional view showing a part of a first housing and a part of a second housing of the liquid crystal display device according to an embodiment of the present invention, which are assembled together.
[FIG. 3] FIG. 3 schematically shows a liquid crystal panel of the liquid crystal display device according to an embodiment of the present invention.
[FIG. 4] FIG. 4 is a partial cross-sectional view showing a part of the first housing and a part of the second housing of the liquid crystal display device according to an embodiment of the present invention, which are assembled together.
[FIG. 5] FIG. 5 is a cross-sectional view showing an example of structure in which a conductive sheet is bonded to a housing of a liquid crystal panel and a housing of a backlight device.

### DESCRIPTION OF EMBODIMENTS

Hereinafter, a liquid crystal display device according to an embodiment of the present invention will be described with reference to the drawings. Elements and portions having identical functions bear identical reference characters appropriately. The relative sizes (length, width, thickness, etc.) in the figures do not necessarily reflect the actual relative sizes accurately.

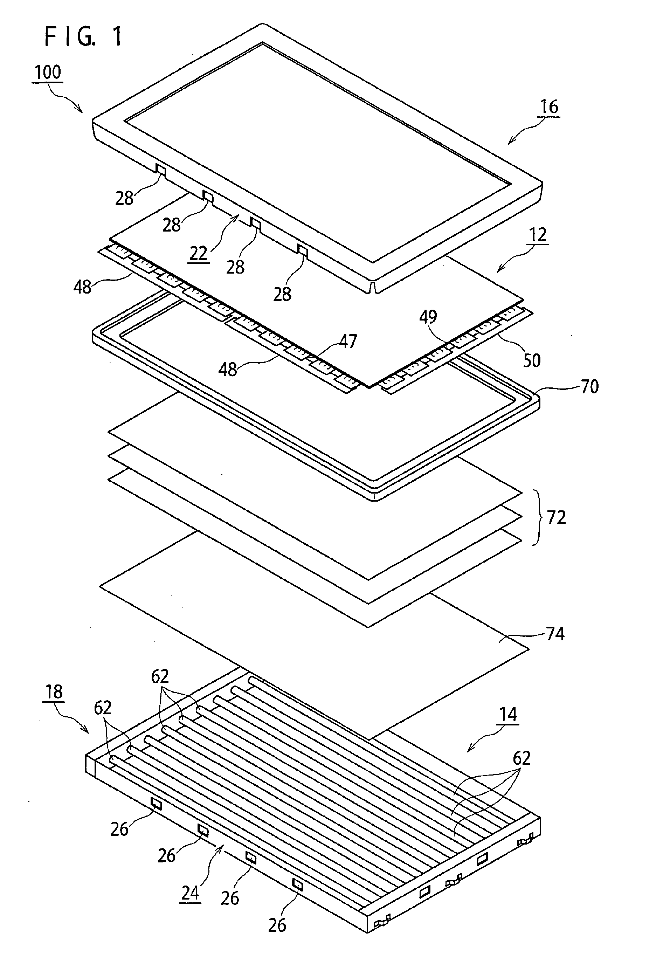

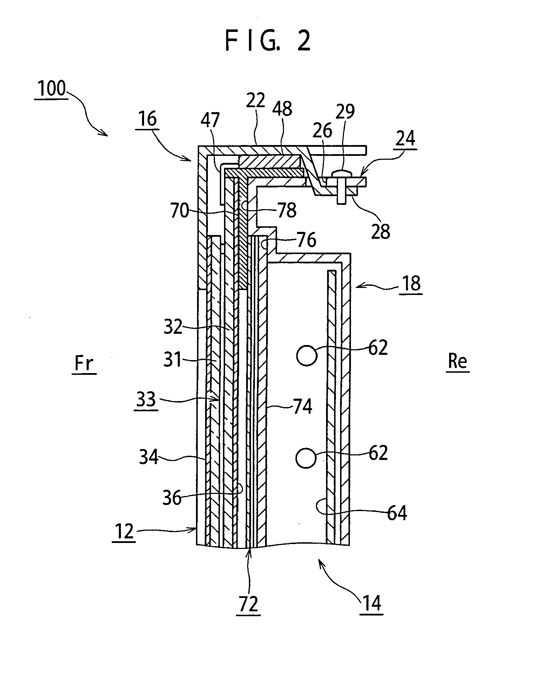

FIG. 1 is an exploded perspective view of a liquid crystal display device 100. FIG. 2 is a vertical cross-sectional view showing a part of a vertical cross-section of the liquid crystal display device 100. In FIG. 2, reference character "Fr" represents a front side of a liquid crystal panel, and reference character "Re" represents a rear side of the liquid crystal panel. FIG. 2 shows a part of a first housing 16 and a part of a second housing 18 which are assembled together.

### <Overview>

As shown in FIG. 1 and FIG. 2, the liquid crystal display device 100 includes a liquid crystal panel 12, a backlight device 14, the first housing 16, and the second housing 18. The backlight device 14 is located to face a rear surface of the liquid crystal panel 12. The first housing 16 supports the liquid crystal panel 12 and has a peripheral portion 22 extending along a periphery of the liquid crystal panel 12. The second housing 18 accommodates the backlight device 14 and has a peripheral portion 24 overlapping an inner surface of the peripheral portion 22 of the first housing 16. The peripheral portion 24 of the second housing 18 has attachment holes 26 formed therein. The peripheral portion 22 of the first housing 16 has attachment pieces 28, which overlap, and are joined to, an inner surface of the peripheral portion 24 of the second housing 18 through the attachment holes 26 of the peripheral portion 24 of the second housing 18.

According to the liquid crystal display device 100 having such a structure, the attachment pieces 28 provided at the peripheral portion 22 of the first housing 16 are inserted through the attachment holes 26 of the peripheral portion 24 of the second housing 18, and as a result, the attachment pieces 28 of the first housing 16 can overlap the inner surface of the peripheral portion 24 of the second housing 18. Therefore, the workability of assembling the first housing 16 and the second housing 18 together is high. Preferably, the first housing and the second housing are each formed of a conductive material. In this case, the first housing 16 and the second housing 18 are joined together via the attachment pieces 28, and therefore, are highly conductive to each other. Thus, the EMI can be reduced.

Hereinafter, the liquid crystal display device 100 will be described in more detail.

### <Liquid crystal panel 12>

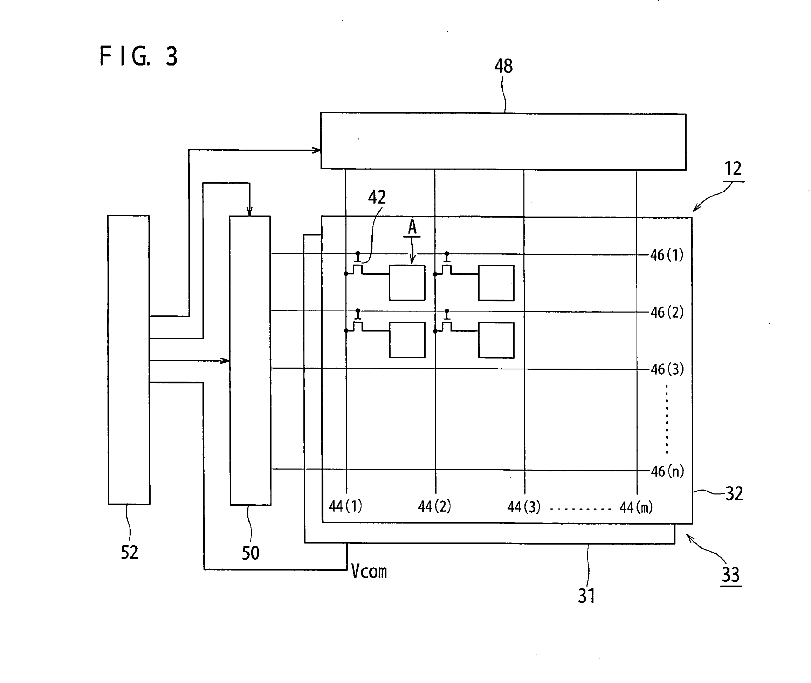

FIG. 3 schematically shows the liquid crystal panel 12. In this embodiment, the liquid crystal panel 12 is rectangular. As shown in FIG. 2 and FIG. 3, the liquid crystal panel 12 is a panel member including a pair of light-transmissive glass substrates 31 and 32 facing each other and a liquid crystal layer 33 formed therebetween. As shown in FIG. 2, the liquid crystal panel 12 has polarizing plates 34 and 36 bonded to two surfaces thereof. Among the pair of glass substrates 31 and 32, one is a color filter substrate 31 and the other is an array substrate 32. The liquid crystal panel 12 includes a plurality of pixels arranged in a matrix.

The color filter 31 has RGB color filters in correspondence with the pixels although the color filters are not shown. The color filter substrate (CF substrate) 31 also includes a counter electrode at a surface thereof facing the array substrate 32. The counter electrode is formed of, for example, ITO (Indium Tin Oxide), which is a transparent conductive material. The counter electrode included in the color filter substrate 31 is connected to a control board 52 and is controlled to have a prescribed reference potential.

The array substrate 32 includes pixel electrodes A and thin film transistors 42 (TFTs) provided in correspondence with the pixels. The pixel electrodes A provided in correspondence with the pixels are formed of, for example, ITO, which is a transparent conductive material. Source lines 44 and gate lines 46 are provided in a lattice in the array substrate 32, and the thin film transistors 42 are each connected to a corresponding source line 44 and a corresponding gate line 46. In FIG. 3, the source lines 44 are represented with reference characters in parentheses so as to be distinguishable from each other, and the gate lines 46 are represented with reference characters in parentheses so as to be distinguishable from each other. The source lines 44 and the gate lines 46 are respectively connected to a source driver 48 and a gate driver 50, which are provided in a peripheral portion of the liquid crystal panel 12. Between the liquid crystal panel 12 and the source driver 48, a flexible wiring board 47 (see FIG. 1) is provided, and between the liquid crystal panel 12 and the gate driver 50, a flexible wiring board 49 (see FIG. 1) is provided. The source driver 48 and the gate driver 50 are each a printed circuit board. The flexible wiring boards 47 and 49 are each a wiring board having a required flexibility. The printed circuit boards 48 and 50 each include an integrated circuit, providing a required function, mounted on a board.

### <Substrate support 70>

As shown in FIG. 1 and FIG. 2, the liquid crystal display device 100 includes a board support 70. The board support 70 is a member for supporting a rear surface of the peripheral portion of the liquid crystal panel 12, a rear surface of each of the flexible wiring boards 47 and 49, and a rear surface of each of the printed circuit boards 48 and 50. In this embodiment, the printed circuit boards 48 and 50 are attached on an inner side surface of the first housing 16 by bending the flexible wiring boards 47 and 49, and in this state, the board support 70 is attached on the rear surfaces of the printed circuit boards 48 and 50. In this embodiment, the board support 70 is formed of an insulating member such as a resin or the like, and also acts as a buffer member for alleviating a force acting on the flexible wiring boards 47 and 49 and on the printed circuit boards 48 and 50.

As shown in FIG. 3, the source driver 48 and the gate driver 50 are each connected to the control board 52. A voltage in accordance with an image is supplied from the control board 52 to each of the pixels A via the source driver 48, the gate driver 50, the corresponding source line 44 and the corresponding gate line 46. Owing to this, liquid crystal molecules in the liquid crystal layer 33 are operated on a pixel-by-pixel basis, so that the transmittance of light directed from the backlight device 14 located to face the rear surface of the liquid crystal panel 12 is controlled.

### <Backlight device 14>

As shown in FIG. 2, the backlight device 14 is a device for irradiating the rear surface of the liquid crystal panel 12 with light. For example, as shown in FIG. 2, a structure including a plurality of light sources 62 located to face the rear surface of the liquid crystal panel is adopted for the backlight device 14. As the light sources 62, for example, cold cathode fluorescent lamps (CCFLs) or light emitting diodes (LEDs) are adopted. Alternatively, a structure including light sources provided along one side of the rear surface of the liquid crystal panel 12 to irradiate the rear surface of the liquid crystal panel with light via a lightguide plate (so-called "edge-light system") may be adopted for the backlight device 14. In this embodiment, the backlight device 14 is accommodated in the second housing 18. The liquid crystal panel 12 is supported by the first housing 16, and the backlight device 14 is located to face the rear surface of the liquid crystal panel 12 by assembling the first housing 16 and the second housing 18 together.

### <First housing 16>

As shown in FIG. 1 and FIG. 2, the first housing 16 supports the liquid crystal panel 12 and includes the peripheral portion 22 extending along the periphery of the liquid crystal panel 12. In this embodiment, the first housing 16 has a shape surrounding an edge of the liquid crystal panel 12 (frame shape), and surrounds front and side surfaces of the edge of the liquid crystal panel 12. The peripheral portion 22 of the first housing 16 has the attachment pieces 28, which are to be joined to the second housing 18. In this embodiment, the attachment pieces 28 are formed by cutting parts of the peripheral portion of the first housing 16 and bending the parts internally. Preferably, the first housing 16 is formed of a conductive material, for example, a metal such as aluminum, iron or the like, in order to prevent the liquid crystal panel 12 from generating unnecessary radiating noise. Preferably, the first housing 16 is formed to have a prescribed shape by, for example, press work made on a sheet metal.

### <Second housing 18>

The second housing 18 accommodates the backlight device 14. In this embodiment, the second housing 18 is a rectangular housing having a front opening facing the liquid crystal panel 12. Preferably, like the first housing 16, the second housing 18 is formed of a conductive material, for example, a metal such as aluminum, iron or the like, in order to prevent the liquid crystal panel 12 from generating unnecessary radiating noise. Preferably, the second housing 18 is formed to have a prescribed shape by press work made on a sheet metal. In this embodiment, as shown in FIG. 2, the second housing 18 accommodates a reflective plate 64 facing the rear surface of the liquid crystal panel 12, and light sources 62 are provided on the reflective plate 64. In this embodiment, cold cathode fluorescent lamps are used as the light sources 62. The second housing 18 has a light source locating section (not shown) in which the light sources 62 are located. The light source locating section is located to face the liquid crystal panel 12, and a peripheral portion thereof is risen.

In this embodiment, an optical sheet 72 and a diffusion sheet 74 are provided between the liquid crystal panel 12 and the backlight device 14. The optical sheet 72 and the diffusion sheet 74 are attached to a peripheral portion around the front opening of the backlight device 14. As shown in FIG. 2, a rising portion 78 of the peripheral portion of the second housing 18 (the portion 78 is a panel supporting portion) supports a rear surface of the board support 70 in the state where the first housing 16 and the second housing 18 are assembled together. Therefore, the portion 78 is molded to have a shape matching the shape of the rear surface of the board support 70.

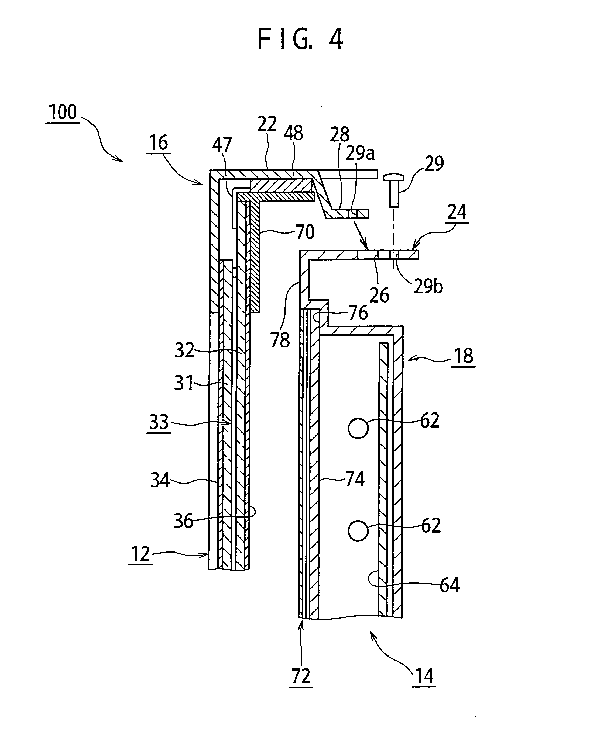

The peripheral portion 24 of the second housing 18 overlaps the inner surface of the peripheral portion 22 of the first housing 16. As shown in FIG. 2 and FIG. 4, in the liquid crystal display device 100, the peripheral portion 24 of the second housing 18 has the attachment holes 26 formed therein. The attachment pieces 28 provided at the peripheral portion 22 of the first housing 16 are inserted into the attachment holes 26 formed in the peripheral portion 24 of the second housing 18 to overlap, and be joined to, the inner surface of the peripheral portion 24 of the second housing 18. In this embodiment, the attachment holes 26 of the second housing 18 are formed to have such a shape that allows the attachment pieces 28 to be inserted therethrough. In this embodiment, during the step of inserting the attachment pieces 28 through the attachment holes 26 to assemble the first housing 16 to the second housing 18, the attachment pieces 28 are bent to overlap the inner surface of the second housing 18.

In this embodiment, as shown in FIG. 4, the board support 70 is attached to rear surfaces of the peripheral portion of the liquid crystal panel 12, the flexible wiring board 47 and the printed circuit board 48 (source driver). As shown in FIG. 2, during the step of assembling the first housing 16 and the second housing 18 together, the printed circuit board 48 and the board support 70 are held between the first housing 16 and the second housing 18. In this embodiment, as shown in FIG. 4, in the state where the liquid crystal panel 12 and the board support 70 are assembled to the first housing 16, the attachment pieces 28 of the first housing 16 are inserted into the attachment holes 26 of the second housing 18. Then, the first housing 16 is slid with respect to the second housing 18. In this manner, as shown in FIG. 2, the first housing 16 can be assembled to the second housing 18. In this embodiment, as shown in FIG. 2 and FIG. 4, the attachment pieces 28 of the first housing 16 and the attachment holes 26 of the second housing 18 are provided along a longer side of the liquid crystal panel 12 (side portion, of the peripheral portion 22 of the first housing 16, along which the source driver 48 is provided). In this case, the attachment pieces 28 of the first housing 16 and the attachment holes 26 of the second housing 18 are provided along the longer side of the liquid crystal panel 12. Therefore, the first housing 16 and the second housing 18 can be assembled together from the longer side of the liquid crystal panel 12, which makes easier the work of assembling the first housing 16 and the second housing 18.

In this embodiment, the attachment pieces 28 and the peripheral portion 24 of the second housing 18 are secured to each other by screws. Specifically, in this embodiment, as shown in FIG. 4, threaded holes 29a are formed in advance at prescribed positions in the vicinity of the attachment pieces 28, and threaded holes 29b are formed in advance at prescribed positions in the vicinity of the attachment holes 26. After the first housing 16 and the second housing 18 are assembled together, screws 29 are inserted into the threaded holes 29a and 29b, so that the attachment pieces 28 of the first housing 16 and the peripheral portion 24 of the second housing 18 are secured to each other by the screws 29.

### <Assembly of the first housing 16 and the second housing 18>

According to the liquid crystal display device 100, the attachment pieces 28 provided at the peripheral portion 22 of the first housing 16 are inserted into the attachment holes 26 of the peripheral portion 24 of the second housing 18, and as a result, the attachment pieces 28 of the first housing 16 can overlap the inner surface of the peripheral portion 24 of the second housing 18. Therefore, the workability of assembling the first housing 16 and the second housing 18 together is high. Preferably, the first housing 16 and the second housing 18 are each formed of a conductive material. In this case, the first housing 16 and the second housing 18 are joined together via the attachment pieces 28, and therefore, are highly conductive to each other. Thus, the EMI can be reduced.

In this embodiment, as shown in FIG. 2, the printed circuit board 48 is provided along the peripheral portion of the liquid crystal panel 12 with the flexible wiring board 47 being interposed therebetween, and the board support 70 is provided for supporting the rear surfaces of the peripheral portion of the liquid crystal panel 12, the flexible wiring board 47 and the printed circuit board 48. The printed circuit board 48 and the board support 70 are held between the first housing 16 and the second housing 18. Therefore, the printed circuit board 48 can be stably positioned between the first housing 16 and the second housing 18.

In this embodiment, the attachment pieces 28 are formed by internally bending parts of the peripheral portion 22 of the first housing 16. In this case, during a step of forming the first housing 16 from a sheet metal, the attachment pieces 28 can be formed by press work. The attachment poles 26 can also be formed by press work in a step of forming the second housing 18 from a sheet metal. In the case where, for example, an existing housing for the liquid crystal display device 100 is produced from a sheet metal by press work, the attachment holes 26 and the attachment pieces 28 described above can be formed by making a small change on a press mold. Therefore, the present invention is easily applicable to an existing liquid crystal display device 100.

In the above-described embodiment, the attachment pieces 28 of the first housing 16 and the peripheral portion 24 of the second housing 18 are secured to each other by the screws 29. In this case, the conductivity between the attachment pieces 28 and the peripheral portion 24 can be secured by the screws 29 with more certainty. In this case, it is preferable that the screws 29 are formed of a conductive material (e.g., iron). The method of joining the attachment pieces 28 and the peripheral portion 24 is not limited to a method of using screws, and any other joining tool such as a rivet or the like is usable as long as the conductivity between the attachment pieces 28 and the peripheral portion 24 is secured.

So far, a liquid crystal display device according to an embodiment of the present invention has been described. The liquid crystal display device according to the present invention is not limited to that of the above-described embodiment.

For example, the specific structure of the liquid crystal display device, such as the structure of the liquid crystal panel, the structure of the backlight device or the like is not limited to that in the above-described embodiment, and any of various other structures may be usable. The materials used for the elements are not limited to the above-described examples. Appropriate materials may be selected in accordance with the functions of the elements. The specific shape and the method of forming the attachment holes and the attachment pieces described above are merely examples, and such a shape and method are not limited to those of the above-described embodiment unless specifically described.

### DESCRIPTION OF REFERENCE CHARACTERS

- 12: Liquid crystal panel
- 14: Backlight device
- 16: First housing (bezel)
- 18: Second housing (backlight chassis)
- 22: Peripheral portion of the first housing
- 24: Peripheral portion of the second housing
- 26: Attachment hole
- 28: Attachment piece
- 29: Screw
- 29a, 29b: Threaded hole
- 31: Color filter substrate
- 31, 32: Glass substrate
- 32: Array substrate
- 33: Liquid crystal layer
- 34, 36: Polarizing plate
- 42: Thin film transistor
- 44: Source line
- 46: Gate line
- 47, 49: Flexible wiring board
- 48: Source driver (printed circuit board)
- 50: Gate driver (printed circuit board)
- 52: Control board
- 62: Light source (cathode fluorescent lamp)
- 64: Reflective plate
- 70: Board support
- 72: Optical sheet
- 74: Diffusion sheet
- 76: Step
- 78: Rising portion of the peripheral portion of the second housing 18 (panel supporting portion)
- 100: Liquid crystal display device
- A: Pixel electrode

## Claims

1. A liquid crystal display device, comprising:
a liquid crystal panel;
a backlight device located to face a rear surface of the liquid crystal panel;
a first housing for supporting the liquid crystal panel, the first housing having a peripheral portion extending along a periphery of the liquid crystal panel;
a second housing for accommodating the backlight device, the second housing having a peripheral portion overlapping an inner surface of the peripheral portion of the first housing;
an attachment hole formed in the peripheral portion of the second housing; and
an attachment piece provided at the peripheral portion of the first housing, and overlapping, and joined to, an inner surface of the peripheral portion of the second housing through the attachment hole in the peripheral portion of the second housing.

2. The liquid crystal display device of claim 1, further comprising:
a printed circuit board connected to the peripheral portion of the liquid crystal panel with a flexible wiring board being provided therebetween; and
a board support for supporting rear surfaces of the peripheral portion of the liquid crystal panel, the flexible wiring board and the printed circuit board;
wherein the printed circuit board and the board support are held between the first housing and the second housing.

3. The liquid crystal display device of claim 1 or 2, wherein the attachment piece is formed by internally bending a part of the peripheral portion of the first housing.

4. The liquid crystal display device of any one of claims 1 through 3, wherein the first housing and the second housing are each formed of a conductive material.

5. The liquid crystal display device of claim 4, wherein the peripheral portion of the second housing and the attachment piece of the first housing are secured to each other by a screw.
